# EUROPEAN PATENT APPLICATION

(11) **EP 2 434 703 A1**
(43) Date of publication of application: **28.03.2012**
(21) Application number: 10791421.0
(22) Date of filing: 01.06.2010
(51) Int. Cl.: H04L 12/56

(54) **METHOD AND TERMINAL FOR TRANSMITTING SERVICE DATA**

(30) Priority: 22.06.2009 CN 200910087760
(71) Applicant: ZTE Corporation, Shenzhen, Guangdong 518057 (CN)
(72) Inventor: SU, Wei, Shenzhen Guangdong 518057 (CN); LIU, Fucai, Shenzhen Guangdong 518057 (CN)
(74) Representative: Bokinge, Ole
(86) International application number: PCT/CN2010/073422
(87) International publication number: WO 2010/148915

(57) **Abstract**

The present invention provides a method and terminal for transmitting service data. Wherein the method for transmitting service data includes: a terminal receiving a first downlink data from a user data processing entity through a base station, wherein a destination IP address in the first downlink data is a virtual IP address, and the virtual IP address is an IP address generated according to a physical identifier of the terminal, an identifier of an application layer user of the terminal and an identifier of the service type requested by the application layer user; the terminal replacing a source IP address in the first downlink data with the virtual IP address, replacing the destination IP address in the first downlink data with a physical IP address of said terminal, and generating a second downlink data; the terminal obtaining an identifier of the application layer user corresponding to the virtual IP address; and the terminal sending said second downlink data to the application layer user. The above method and terminal for transmitting service data are able to implement the virtualization of multiple terminals and multiple services on the same terminal through the virtual IP address.

## Description

### Technical Field

The present invention relates to the mobile communication field, and particularly, to a method and terminal for transmitting service data.

### Background of the Related Art

In the process of processing the service data, a case of carrying out multiple services in the same entity will occur, and if multiple services are carried out in one terminal, it can be implemented by the Packet Filter (PF). However, it is unable to implement the virtualization of multiple User Equipment (UE) and multiple services on the same terminal in the prior art.

### Summary of the Invention

The technical problem to be solved in the present invention is to provide a method and terminal for transmitting service data, which is able to implement virtualization of multiple terminals and multiple services on the same terminal.

In order to solve the above technical problem, the technical scheme provided in the examples of the present invention is as follows:
in one aspect, a method for transmitting service data is provided, which is applied in a scenario of a terminal sending uplink data to a user data processing entity, and this method comprises:
   the terminal obtaining a virtual Internet Protocol (IP) address corresponding to a service type requested by an application layer user of said terminal, wherein said virtual IP address is an IP address generated according to a physical identifier of said terminal, an identifier of said application layer user and an identifier of said service type;
said terminal receiving first uplink data of said service type, wherein a source IP address in said first uplink data is a physical IP address of said terminal, and a destination IP address is said virtual IP address;
said terminal replacing the source IP address in said first uplink data with said virtual IP address, replacing the destination IP address in said first uplink data with a physical IP address of a service server corresponding to said service type, and generating second uplink data; and
said terminal sending said second uplink data to the user data processing entity through a base station, and said user data processing entity forwarding said second uplink data to said service server.

The step of said terminal obtaining the virtual IP address corresponding to the service type requested by the application layer user of said terminal comprises:
said terminal processing the physical identifier of said terminal, the identifier of said application layer user and the identifier of said service type according to a virtual IP address allocation rule, and generating said virtual IP address; or
the step of said terminal obtaining the virtual IP address corresponding to the service type requested by the application layer user of said terminal comprises:
   said terminal sending a message including the physical identifier of said terminal, the identifier of said application layer user and the identifier of said service type to an IP address allocation entity; and
   said terminal receiving the virtual IP address from said IP address allocation entity, and said virtual IP address being an IP address generated by said IP address allocation entity processing the physical identifier of said terminal, the identifier of said application layer user and the identifier of said service type.

After the step of said terminal replacing the source IP address in said first uplink data with said virtual IP address, replacing the destination IP address in said first uplink data with the physical IP address of the service server corresponding to said service type, and generating the second uplink data, the method further comprises:
said terminal carrying out cyclic redundancy check on said second uplink data.

Before the step of said terminal sending said second uplink data to the user data processing entity through the base station, the method further comprises:
said terminal carrying out bearer mapping according to said service type identifier;
the step of said terminal sending said second uplink data to the user data processing entity through the base station comprises:
   said terminal sending said second uplink data to the user data processing entity through said base station according to said bearer mapping.
   Said virtual IP address further comprises: information of base station where said terminal is located;
the step of said terminal processing the physical identifier of said terminal, the identifier of said application layer user and the identifier of said service type according to the virtual IP address allocation rule, and generating said virtual IP address comprises:
   said terminal processing the physical identifier of said terminal, the identifier of said application layer user, the identifier of said service type, and an identifier of the base station where said terminal is located according to the virtual IP address allocation rule, and generating said virtual IP address;
the step of said terminal receiving the virtual IP address from said IP address allocation entity, and said virtual IP address being the IP address generated by said IP address allocation entity processing the physical identifier of said terminal, the identifier of said application layer user and the identifier of said service type comprises:
   said terminal receiving the virtual IP address from said IP address allocation entity, and said virtual IP address being the IP address generated by said IP address allocation entity processing the physical identifier of said terminal, the identifier of said application layer user, the identifier of said service type and the identifier of the base station where said terminal is located.

In another aspect, a method for transmitting service data is provided, which is applied in a scenario of a terminal receiving downlink data from a user data processing entity, and said method comprises:
said terminal receiving first downlink data from said user data processing entity through a base station, wherein a destination Internet Protocol (IP) address in said first downlink data is a virtual IP address, and said virtual IP address is an IP address generated according to a physical identifier of said terminal, an identifier of an application layer user of said terminal and an identifier of a service type requested by said application layer user;
said terminal replacing a source IP address in said first downlink data with said virtual IP address, replacing the destination IP address in said first downlink data with a physical IP address of said terminal, and generating second downlink data;
said terminal obtaining an identifier of the application layer user corresponding to said virtual IP address; and
said terminal sending said second downlink data to said application layer user.

In another aspect, a terminal is provided, and comprises:
a first obtaining unit, which is configured to obtain a virtual Internet Protocol (IP) address corresponding to a service type requested by an application layer user of said terminal, wherein said virtual IP address is an IP address generated according to a physical identifier of said terminal, an identifier of said application layer user and an identifier of said service type;
a first receiving unit, which is configured to receive first uplink data of said service type from an application layer of said terminal, wherein a source IP address in said first uplink data is a physical IP address of said terminal, and a destination IP address is said virtual IP address;
a first replacing unit, which is configured to replace the source IP address in said first uplink data with said virtual IP address, and replace the destination IP address in said first uplink data with a physical IP address of a service server corresponding to said service type, and generate second uplink data; and
a first sending unit, which is configured to send said second uplink data to the user data processing entity through a base station.

The examples of the present invention have following beneficial effects:
in the above scheme, said virtual IP address is the IP address generated according to the physical identifier of said terminal, the identifier of said application layer user and the identifier of said service type, and since each unique virtual IP address denotes different service types of different users of different physical IP address terminals, or denotes different service types of the same user of the same physical IP address terminal, or denotes the same service type of different users of the same physical IP address terminal, when the same user of the same terminal requests different services, the virtual IP addresses are different; when different users of the same terminal request the same service, the virtual IP addresses are different, and all of them correspond to one unique virtual IP address respectively. Therefore, virtualization of multiple terminals and multiple services is able to be implemented on the same terminal.

### Brief Description of Drawings

FIG. 1 is a flow schematic diagram of the method for transmitting service data according to one example of the present invention;
FIG. 2 is a flow schematic diagram of the method for transmitting service data according to another example of the present invention;
FIG. 3 is a flow schematic diagram of the method for transmitting service data according to the other example of the present invention;
FIG. 4 is a flow schematic diagram of the method for transmitting service data according to the yet another example of the present invention;
FIG. 5 is a structure schematic diagram of the terminal according to one example of the present invention;
FIG. 6 is a structure schematic diagram of the terminal according to another example of the present invention;
FIG. 7 is a structure schematic diagram of the terminal according to the other example of the present invention;
FIG. 8 is a structure schematic diagram of the user data processing entity according to the present invention;
FIG. 9 is a structure schematic diagram of the system for transmitting service data according to one example of the present invention;
FIG. 10 is a structure schematic diagram of the system for transmitting service data according to another example of the present invention;
FIG. 11 is a structure schematic diagram of the application scenario of the system for transmitting service data according to the present invention.

### Preferred Embodiments of the Present Invention

In order to make the technical problem to be solved, technical scheme and advantages of examples of the present invention clearer, below it will describe the present invention in combination with the figures and particular examples in detail.

The examples of the present invention provide a method and system for transmitting service data, a terminal and a user data processing entity regarding to the problem that the prior art is unable to implement the virtualization of multiple terminals and multiple services on the same terminal.

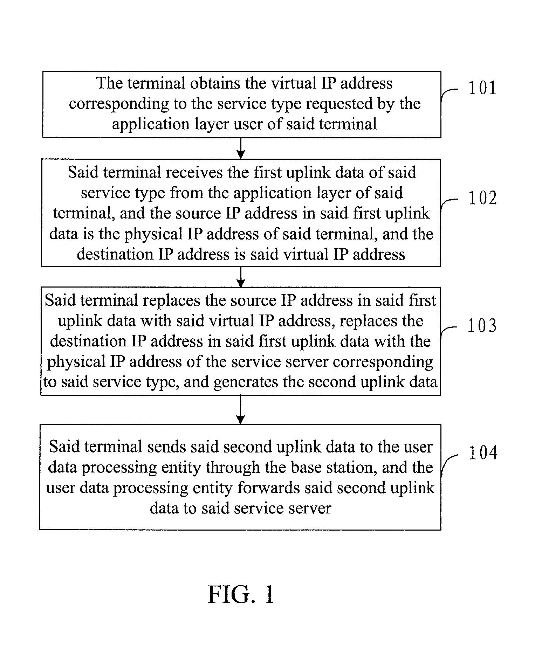

As shown in FIG. 1, it is one example of the method for transmitting service data according to examples of the present invention, and this scenario is the case of the terminal sending uplink data to the user data processing entity. Said method comprises:
step 101, the terminal obtains the virtual Internet Protocol (IP) address corresponding to the service type requested by the application layer user of said terminal, and said virtual IP address is the IP address generated according to the physical identifier of said terminal, the identifier of said application layer user and the identifier of said service type, and the physical identifier of the terminal can be the physical IP address of the terminal. Said virtual IP address includes the service type identifier and the virtual identifier, said service type identifier denotes said service type, and said virtual identifier denotes the serial number corresponding to the physical IP address of said terminal and the identifier of said application layer user. Besides, the virtual IP address is unable to be the reserved IP address. The reserved IP address includes: the restricted broadcast address, the broadcast address pointing to the network, the broadcast address pointing to the subnetwork, the broadcast address pointing to all of the subnetworks, and all zero and loopback interface address.
Step 102, said terminal receives the first uplink data of said service type from the application layer of said terminal, the source IP address in said first uplink data is the physical IP address of said terminal, and the destination IP address is said virtual IP address.
Step 103, said terminal replaces the source IP address in said first uplink data with said virtual IP address, and replaces the destination IP address in said first uplink data with the physical IP address of the service server corresponding to said service type, and generates the second uplink data.
Step 104, said terminal sends said second uplink data to the user data processing entity through the base station, and the user data processing entity forwards said second uplink data to said service server.

In the above scheme, said virtual IP address is the IP address generated according to the physical identifier of said terminal, the identifier of said application layer user and identifier of said service type, and thus each unique virtual IP address denotes different service types of different users of different physical IP address terminals, or denotes different service types of the same user of the same physical IP address terminal, or denotes the same service type of different users of the same physical IP address terminal. When the same one user of the same one terminal requests different services, the virtual IP addresses are different; when different users of the same terminal request the same service, the virtual IP addresses are different, and all of them correspond to one unique virtual IP address respectively. Therefore, virtualization of multiple terminals and multiple services is able to be implemented on the same one terminal.

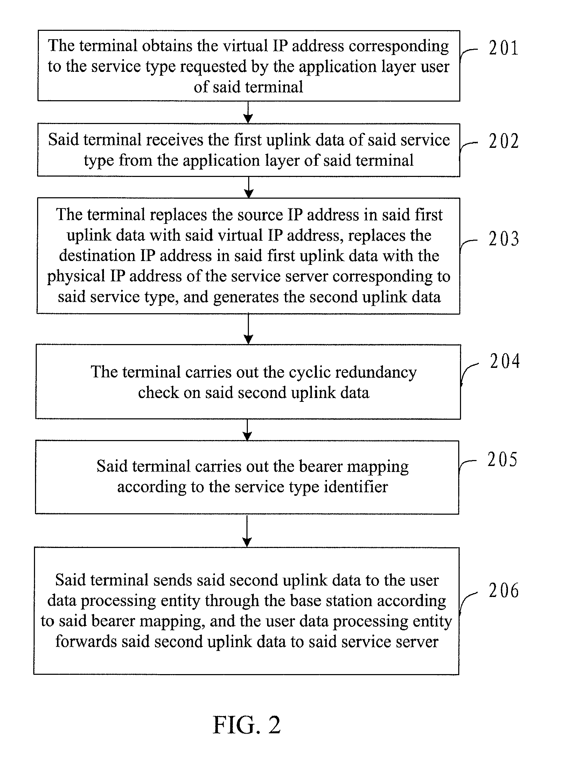

As shown in FIG. 2, it is another example of said method for transmitting service data according to examples of the present invention, and this scenario is a case of the terminal sending uplink data to the user data processing entity. Said method comprises:
step 201, the terminal obtains the virtual IP address corresponding to the service type requested by the application layer user of said terminal, and said virtual IP address is the IP address generated according to the physical identifier of said terminal, the identifier of said application layer user and the identifier of said service type. The physical identifier of the terminal can be the physical IP address of the terminal. Said virtual IP address can include the service type identifier and the virtual identifier, said service type identifier denotes said service type, and said virtual identifier denotes the serial number corresponding to the physical IP address of said terminal and the identifier of said application layer user. Said virtual IP address is 32 bits, and the relationship between said terminal and said virtual IP address is one to one corresponding relationship. Said service identifier can denote class 11 service, and when the same terminal requests different services, the virtual IP addresses are different, and when different users of the same terminal request the same service, the virtual IP address are different, and all of them correspond to one unique virtual IP address respectively. Besides, said virtual IP address further includes: information of the base station where said terminal is located, which can be the identifier of said base station where said terminal is located. Thus, the terminals for different access to the base station can correspond to one unique virtual IP address respectively. The virtual IP address is unable to be the reserved IP address. The reserved IP address includes: the restricted broadcast address, the broadcast address pointing to the network, the broadcast address pointing to the subnetwork, the broadcast address pointing to all the subnetworks, and all zero and loopback interface address.

The step of the terminal obtaining the virtual IP address corresponding to the service type requested by the application layer user of said terminal specifically comprises: said terminal processing the physical identifier of said terminal, the identifier of said application layer user and the identifier of said service type according to the virtual IP address allocation rule, and generating said virtual IP address.

Or the step of said terminal obtaining the virtual IP address corresponding to the service type requested by the application layer user of said terminal specifically comprises:
said terminal sending the message including the physical identifier of said terminal, the identifier of said application layer user and the identifier of said service type to the IP address allocation entity;
said terminal receiving the virtual IP address from said IP address allocation entity, and said IP address is the IP address generated by said IP address allocation entity processing the physical identifier of said terminal, the identifier of said application layer user and the identifier of said service type. In the practical application, the IP address allocation entity can be configured in the mobile management entity.

When said virtual IP address includes information of the base station where said terminal is located, the step of said terminal processing the physical identifier of said terminal, the identifier of said application layer user and the identifier of said service type according to the virtual IP address allocation rule, and generating said virtual IP address comprises:
said terminal processing the physical identifier of said terminal, the identifier of said application layer user, the identifier of said service type and the identifier of the base station where said terminal is located according to the virtual IP address allocation rule, and generating said virtual IP address.

Or, the step of said terminal obtaining the virtual IP address corresponding to the service type requested by the application layer user of said terminal specifically comprises:
said terminal sending a message including the physical identifier of said terminal, the identifier of said application layer user, the identifier of said service type, and the identifier of the base station where said terminal is located to the IP address allocation entity;
said terminal receiving the virtual IP address from said IP address allocation entity, and said virtual IP address is the IP address generated by said IP address allocation entity processing the physical identifier of said terminal, the identifier of said application layer user, the identifier of said service type and the identifier of the base station where said terminal is located.

Step 202, said terminal receives the first uplink data of said service type from the application layer of said terminal, and the source IP address in said first uplink data is the physical IP address of said terminal, and the destination IP address is said virtual IP address.

Step 203, said terminal replaces the source IP address in said first uplink data with said virtual IP address, replaces the destination IP address in said first uplink data with the physical IP address of the service server corresponding to said service type, and generates the second uplink data.

Step 204, the terminal carries out the cyclic redundancy check on said second uplink data. Carrying out the cyclic redundancy check can ensure the correctness of the data. Besides, the cyclic redundancy check can use the increment calculation way, and thus the required processing speed of check is improved.

Step 205, said terminal carries out bearer mapping according to the service type identifier; carrying out bearer mapping according to the service type identifier is able to simplify the complexity of the protocol processing.

Step 206, said terminal sends said second uplink data to the user data processing entity through said base station according to said bearer mapping, and said user data processing entity forwards said second uplink data to said service server.

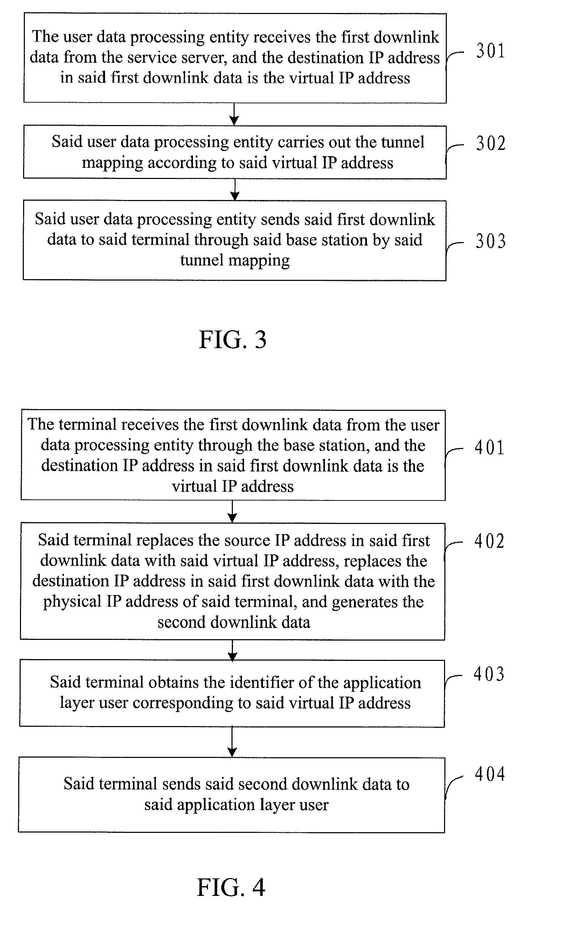

As shown in FIG. 3, it is the other example of the method for transmitting the service data according to examples of the present invention, and this scenario is the case of the user data processing entity sending downlink data to the terminal. Said method comprises:
step 301, the user data processing entity receives the first downlink data from the service server, and the destination IP address in said first downlink data is the virtual IP address.
Step 302, said user data processing entity carries out the tunnel mapping according to said virtual IP address; carrying out the tunnel mapping according to said virtual IP address simplifies the complexity of the protocol processing.
Step 303, said user data processing entity sends said first downlink data to said terminal through said base station by said tunnel mapping.

In the above scheme, said virtual IP address corresponds to the virtual IP address of the method for transmitting service data shown in FIG. 1 and FIG. 2, and said virtual IP address is the IP address generated according to the physical identifier of said terminal, the identifier of said application layer user and the identifier of said service type. The virtual IP address is unable to be the reserved IP address. The reserved IP address includes: the restricted broadcast address, the broadcast address pointing to the network, the broadcast address pointing to the subnetwork, the broadcast address pointing to all the subnetworks, and all zero and loopback interface address. Therefore, each unique virtual IP address denotes different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when different users of the same terminal requests the same service, the virtual IP addresses are different, and all of them correspond to the unique virtual IP addresses respectively. Therefore, virtualization of multiple terminals and multiple services is able to be implemented on the same terminal.

As shown in FIG. 4, it is yet another example of the method for transmitting service data according to examples of the present invention, and this scenario is the case of the terminal receiving downlink data from the user data processing entity. Said method comprises:
step 401, the terminal receives the first downlink data from the user data processing entity through the base station, and the destination IP address in said first downlink data is the virtual IP address, which particularly comprises: the user data processing entity receiving the first downlink data from the service server, then the user data processing entity sending the first downlink data to the terminal through the base station. Said virtual IP address is the IP address generated according to the physical identifier of said terminal, the identifier of said application layer user of said terminal and the identifier of said service type requested by said application layer user. Said virtual IP address includes the service type identifier and the virtual identifier, and said service type identifier denotes the service type, and said virtual identifier denotes the serial number corresponding to the physical IP address of said terminal and the identifier of the application layer user of said terminal. Besides, said virtual IP address can further comprise: the base station identifier. Thus, the terminals for different access to base station are able to correspond to one unique virtual IP address respectively. Besides, the virtual IP address is unable to be the reserved IP address. The reserved IP address include: the restricted broadcast address, the broadcast address pointing to the network, the broadcast address pointing to the subnetwork, the broadcast address pointing to all the subnetworks, and all zero and loopback interface address, wherein the first downlink data of the user data processing entity is received from the service server.
Step 402, said terminal replaces the source IP address in said first downlink data with said virtual IP address, replaces the destination IP address in said first downlink data with the physical IP address of said terminal, and generates the second downlink data. This step further comprises: the terminal carrying out the cyclic redundancy check on said second downlink data. Carrying out the cyclic redundancy check can ensure the correctness of the data. Besides, the cyclic redundancy check can use the increment calculation way, and thus the required processing speed of check is improved.
Step 403, said terminal obtains the identifier of the application layer user corresponding to said virtual IP address.
Step 404, said terminal sends said second downlink data to said application layer user.

In the above scheme, said virtual IP address is the IP address generated according to the physical identifier of said terminal, the identifier of said application layer user and the identifier of said service type, and thus each unique virtual IP address denotes the different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when different users of the same terminal request the same service, the virtual IP addresses are different, and all of them correspond to one unique virtual IP address respectively. Therefore, virtualization of multiple terminals and multiple services is able to be implemented on the same terminal.

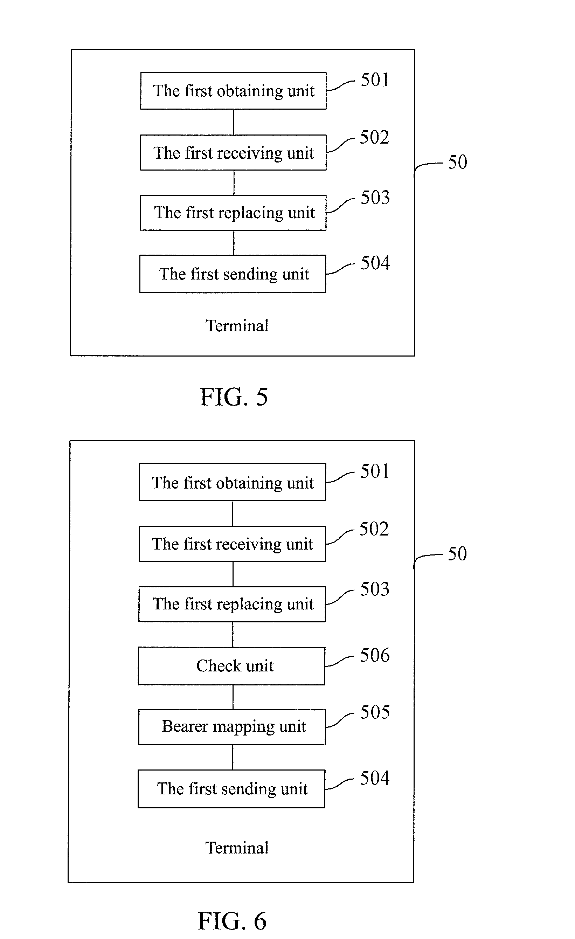

As shown in FIG. 5, it is one example of said terminal according to examples of the present invention, which is applied in a case of the terminal sending uplink data to the user data processing entity. Said terminal 50 comprises:
the first obtaining unit 501, which is configured to obtain the virtual IP address corresponding to the service type requested by the application layer user of said terminal, and said virtual IP address is the IP address generated according to the physical identifier of said terminal, the identifier of said application layer user and the identifier of said service type; the physical identifier of the terminal can be the physical IP address of the terminal. Said virtual IP address includes the service type identifier and the virtual identifier, and said service type identifier denotes said service type, and said virtual identifier denotes the serial number corresponding to the physical IP address of said terminal and the identifier of said application layer user. Besides, said virtual IP address can further include: the base station identifier. Thus, the terminals for the different access to base station can correspond to one unique virtual IP address respectively. Besides, the virtual IP address is unable to be the reserved IP address. The reserved IP address includes: the restricted broadcast address, the broadcast address pointing to the network, the broadcast address pointing to the subnetwork, the broadcast address pointing to all the subnetworks, and all zero and loopback interface address.

The first receiving unit 502, which is configured to receive the first uplink data of said service type, and the source IP address of said first uplink data is the physical IP address of said terminal, and the destination IP address is said virtual IP address;
the first replacing unit 503, which is configured to replace the source IP address in said first uplink data with said virtual IP address, and replace the destination IP address in said first uplink data with the physical IP address of the service server corresponding to said service type, and generate the second uplink data;
the first sending unit 504, which is configured to send said second uplink data to the user data processing entity through the base station.

In the above scheme, said virtual IP address is the IP address generated according to the physical identifier of said terminal, the identifier of said application layer user and the identifier of said service type, and thus each unique virtual IP address denotes different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when the different users of the same terminal request the same service, the virtual IP addresses are different, and all of them correspond to one unique virtual IP address respectively. Therefore, virtualization of multiple terminals and multiple services is able to be implemented on the same terminal.

As shown in FIG. 6, it is another example of said terminal 50 according to examples of the present invention, which is applied in a case of the terminal sending uplink data to the user data processing entity.

Wherein the first obtaining unit 501 is configured to process the physical identifier of said terminal, the identifier of said application layer user and the identifier of said service type according to the virtual IP address allocation rule, and generate said virtual IP address.

Or the first obtaining unit 501 particularly comprises:
a sending subunit, which is configured to send a message including the physical identifier of said terminal, the identifier of said application layer user and the identifier of said service type to the IP address allocation entity; and
a receiving subunit, which is configured to receive the virtual IP address from said IP address allocation entity, and said virtual IP address is the IP address generated by said IP address allocation entity processing the physical identifier of said terminal, the identifier of said application layer user and the identifier of said service type.
Said terminal 50 can further comprise: a bearer mapping unit 505, which is configured to carry out the bearer mapping according to said service type identifier;
the first sending unit 504 is configured to send said second uplink data to the user data processing entity through said base station according to the bearer mapping carried out by said bearer mapping unit 505. Thus, the protocol complexity can be simplified.
Said terminal 50 can further comprise: a check unit 506, which is configured to carry out the cyclic redundancy check on said second uplink data generated by said first replacing unit 503. Carrying out the cyclic redundancy check can ensure the correctness of the data. Besides, the cyclic redundancy check can use the increment calculation way, and thus the required processing speed of check can be improved.

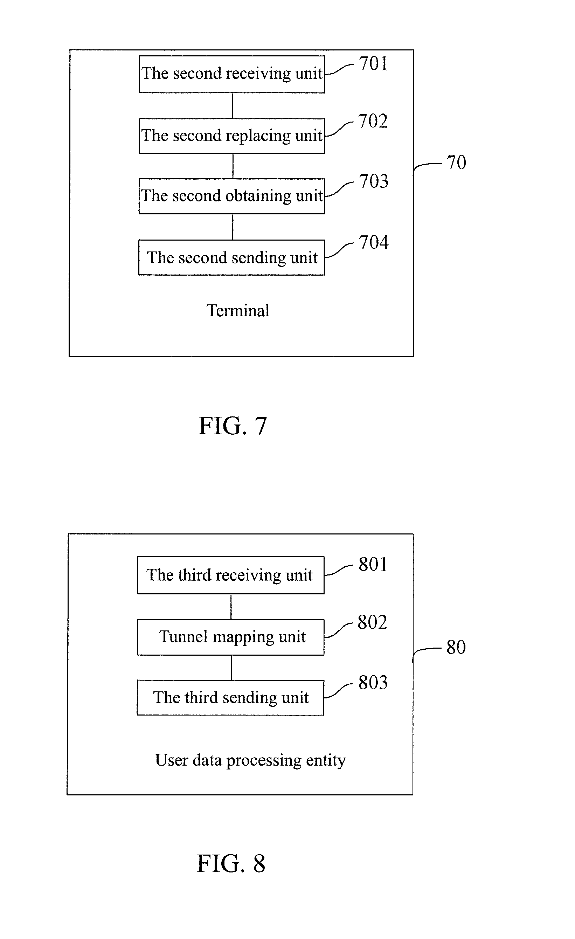

As shown in FIG. 7, it is the other example of said terminal according to examples of the present invention, which is applied in the case of the terminal receiving downlink data from the user data processing entity. Said terminal 70 comprises:
the second receiving unit 701, which is configured to receive the first downlink data from the user data processing entity through the base station, and the destination IP address in said first downlink data is the virtual IP address, and said virtual IP address is the IP address generated according to the physical identifier of said terminal, the identifier of said application layer user of said terminal and the identifier of said service type requested by said application layer user. Besides, the virtual IP address is unable to be the reserved IP address. The reserved IP address includes: the restricted broadcast address, the broadcast address pointing to the network, the broadcast address pointing to the subnetwork, the broadcast address pointing to all the subnetworks, and all zero and loopback interface address.

The second replacing unit 702, which is configured to replace the source IP address in said first downlink data with said virtual IP address, replace the destination IP address in said first downlink data with the physical IP address of said terminal, and generate the second downlink data;
the second obtaining unit 703, which is configured to obtain the identifier of the application layer user corresponding to said virtual IP address;
the second sending unit 704, which is configured to send said second downlink data to said application layer user.

Said terminal 70 can further comprise: a check unit, which is configured to carry out the cyclic redundancy check on the second downlink data to ensure the correctness of the data.

Wherein, the first downlink data of the user data processing entity is received from the service server, which particularly comprises: the user data processing entity receiving the first downlink data from the service server, and then the user data processing entity sending the first downlink data to the terminal through the base station.

In the above scheme, said virtual IP address is the IP address generated according to the physical identifier of said terminal, the identifier of said application layer user and the identifier of said service type. Therefore, each unique virtual IP address denotes different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when the different users of the same terminal request the same service, the virtual IP addresses are different, and all of them correspond to one unique virtual IP address respectively. Therefore, virtualization of multiple terminals and multiple services is able to be implemented on the same terminal.

The person skilled in the art could understand that the terminal 50 and terminal 70 can be configured in the same terminal.

As shown in FIG. 8, it is one example of said user data processing entity according to examples of the present invention, which is applied in the case of the user data processing entity sending downlink data to the terminal. Said user data processing entity 80 comprises:
the third receiving unit 801, which is configured to receive the first downlink data from the service server, and the destination IP address in said first downlink data is the virtual IP address.

The tunnel mapping unit 802, which is configured to carry out the tunnel mapping according to said virtual IP address;
the third sending unit 803, which is configured to send said first downlink data to said terminal through the base station by said tunnel mapping.

In the above scheme, said virtual IP address corresponds to the virtual IP address in the terminal example shown in FIG. 5. The virtual IP address is the IP address generated according to the physical identifier of said terminal, the identifier of said application layer user and the identifier of said service type, and thus, each unique virtual IP address denotes different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when the different users of the same terminal request the same service, the virtual IP addresses are different, and all of them correspond to one unique virtual IP address respectively. Therefore, virtualization of multiple terminals and multiple services is able to be implemented on the same terminal.

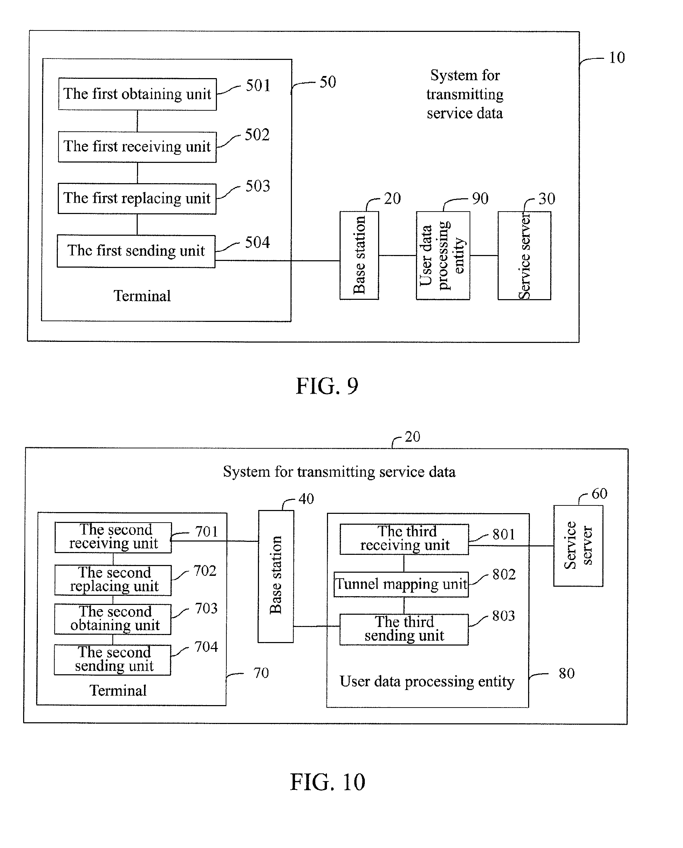

As shown in FIG. 9, it is one example of the system for transmitting service data according to examples of the present invention, which is applied in the case of the terminal sending uplink data to the user data processing entity. The system for transmitting service data 10 comprises: a terminal 50, a base station 20, a user data processing entity 90 and a service server 30.

Said terminal 50 comprises:
the first obtaining unit 501, which is configured to obtain the virtual IP address corresponding to the service type requested by the application layer user of said terminal 50, and said virtual IP address is the IP address generated according to the physical identifier of said terminal 50, the identifier of said application layer user and the identifier of said service type; the physical identifier of the terminal 50 can be the physical IP address of the terminal 50.

The first receiving unit 502, which is configured to receive the first uplink data of said service type from the application layer of said terminal 50, the source IP address in said first uplink data is the physical IP address of said terminal 50, and the destination IP address is said virtual IP address;
the first replacing unit 503, which is configured to replace the source IP address in said first uplink data with said virtual IP address, replace the destination IP address in said first uplink data with the IP address of said service server 30 corresponding to said service type, and generate the second uplink data;
the first sending unit 504, which is configured to send said second uplink data to the user data processing entity 90 through said base station 20; and said user data processing entity 90 forwards said second uplink data to said service server 30.

In the above scheme, said virtual IP address is the IP address generated according to the physical identifier of said terminal, the identifier of said application layer user and the identifier of said service type, and thus, each unique virtual IP address denotes the different service types of different users of different physical IP address terminals, or denotes the different service types of the same user of the same physical IP address terminal, or denotes the same service type of different users of the same physical IP address terminal. When the same user of the same terminal requests different services, the virtual IP addresses are different; when the different users of the same terminal request the same service, the virtual IP addresses are different, and all of them correspond to one unique virtual IP address respectively. Therefore, virtualization of multiple terminals and multiple services is able to be implemented on the same terminal.

As shown in FIG. 10, it is one example of said system for transmitting service data according to examples of the present invention, which is applied in the case of the terminal receiving downlink data from the user data processing entity. Said system for transmitting service data 20 comprises: a terminal 70, a base station 40, a user data processing entity 80 and a service server 60.

Said terminal 70 comprises:
the second receiving unit 701, which is configured to receive the first downlink data from the user data processing entity 80 through the base station 40, and the destination IP address in said first downlink data is the virtual IP address, and said virtual IP address is the IP address generated according to the physical identifier of said terminal, the identifier of said application layer user of said terminal and the identifier of service type requested by said application layer user. Said virtual IP address includes the service type identifier and the virtual identifier, and said service type identifier denotes the service type, and said virtual identifier denotes the serial number corresponding to the physical IP address of the terminal and the identifier of the application layer user of said terminal. Besides, said virtual IP address can further include: the base station identifier. Thus, the terminals for different access to base station can correspond to one unique virtual IP address respectively.

The second replacing unit 701, which is configured to replace the source IP address in said first downlink data with said virtual IP address, replace the destination IP address in said first downlink data with the physical IP address of said terminal, and generate the second downlink data;
the second obtaining unit 703, which is configured to obtain the identifier of the application layer user corresponding to said virtual IP address;
the second sending unit 704, which is configured to send said second downlink data to said application layer user;
said user data processing entity 80 comprises:
the third receiving unit 80I, which is configured to receive said first downlink data from said service server 60, and the destination IP address in said first downlink data is the virtual IP address;
the tunnel mapping unit 802, which is configured to carry out the tunnel mapping according to said virtual IP address;
the third sending unit 803, which is configured to send said first downlink data to said terminal 70 through said base station 40 by said tunnel mapping.

In the above scheme, said virtual IP address is the IP address generated according to the physical identifier of said terminal, the identifier of said application layer user and the identifier of said service type, and thus, each unique virtual IP address denotes the different service types of different users of different physical IP address terminals, or denotes the different service types of the same user of the same physical IP address terminal, or denotes the same service type of different users of the same physical IP address terminal. When the same user of the same terminal requests different services, the virtual IP addresses are different; when different users of the same terminal request the same service, the virtual IP addresses are different, and all of them correspond to one unique virtual IP address respectively. Therefore, virtualization of multiple terminals and multiple services is able to be implemented on the same terminal.

The person skilled in the art could understand that the system for transmitting the service data 10 and the system for transmitting the service data 20 can be the same system, namely the terminal 50 and terminal 70 are the same terminal, and the user data processing entity 80 and the user data processing entity 90 are the same user data processing entity, and the base station 20 and the terminal 40 are the same base station, and the service server 30 and the service server 60 are the same service server.

The present invention virtualizes multiple terminals in the same entity, and allocates one unique virtual IP address to each service of each virtual terminal, thereby implementing different virtual terminals to carry out different services. Multiple terminals and multiple services on the same terminal entity are able to be virtualized, and that is, multiple virtual terminals and multiple services are implemented on the same terminal entity, and the implementation complexity in the protocol is simplified.

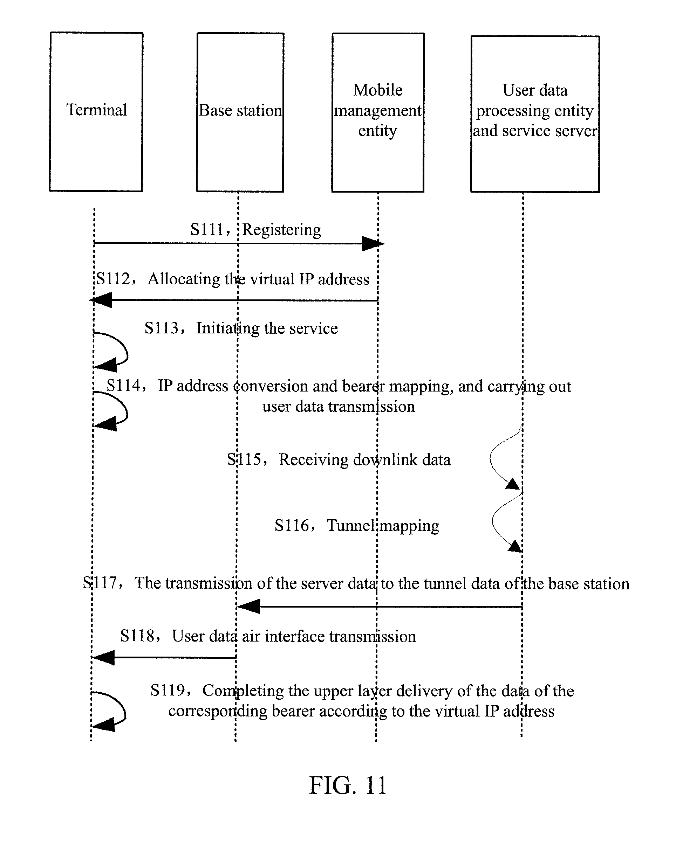

As shown in FIG. 11, it is the application scenario of the system for transmitting service data according to examples of the present invention, including two cases of the uplink and the downlink. The method for transmitting the service data comprises:
S111, the terminal initiates the register to the Mobile Management Entity (MME).
S112, the mobile management entity allocates the virtual IP addresses according to the virtual IP address allocation policy, and allocates one virtual IP address to the terminal, and establishes one to one corresponding relationship between the physical IP address and the virtual IP address of the terminal. The virtual IP address includes the bearer information, and the virtual IP address is composed of the terminal identifier and the service type identifier.
S113, the terminal initiates the service request, and the destination IP address of the service is the virtual IP address of the terminal.
S114, the terminal receives the first uplink data from the application layer program, replaces the IP addresses, namely fills the IP address of the service server into the destination IP address, fills the virtual IP address into the source IP address, and generates the second uplink data. After generating the second uplink data, carry out the Cyclic Redundancy Check (CRC) increment calculation of the transport layer and the IP address header of the data packet of IP address. S120, the terminal carries out the bearer mapping according to the service type identifier in the virtual IP address, and the base station sends the second uplink data to the user plane processing entity through the GPRS TUNNEL PROTOCO-User Plane (GTP_U).
S115, the user data processing entity receives the first downlink data from the service server, and abstracts the source IP address and the destination IP address from said first downlink data. Said destination IP address is the virtual IP address, and the virtual IP address is composed of the terminal identifier and the service type identifier.
S116, the user data processing entity searches the corresponding Tunnel Endpoint Identifier (TE identifier) information of the tunnel according to said destination IP address, and fills the GTP-U header information, carries out the tunnel mapping, sends to the corresponding tunnel of the base station, and completes the data transmission to ensure the correct transmission of the tunnel data.
S117, the base station is responsible for mapping the user information into the different bearers, and completes the transmission of the air interface data.
S118, the terminal receives the air interface data.
S119, after receiving the air interface data, the terminal completes the data conversion of the virtual IP address to the practical IP address of the terminal, namely, replaces the destination IP address in the air interface data with the physical IP address of the terminal, thereby delivering the data to the application layer.

The present invention provides a scheme for implementing that the different virtual terminals carry out multiple services at the same time. Said method examples correspond to said apparatus examples, and the part which is not described in the method examples in detail refers to the description of the related part in the apparatus examples, and the part which is not described in the apparatus examples in detail refers to the description of the related part in the method examples.

The ordinary person skilled in the art could understand that all or parts of steps implementing above method examples can be implemented by the program commanding related hardware, and all the programs can be stored in one computer readable memory medium, and when this program is executed, the steps in the above method examples are included, and said memory medium includes the magnetic disk, optical disk, Read-Only Memory (ROM) or Random Access Memory (RAM) and so on.

In each method example of the present invention, the sequence numbers of various steps are unable to be used for limiting the order of steps, and for the ordinary person skilled in the art, in the prerequisite that creative work is not needed, the transformation of the order of steps also falls into the protection scope of the present invention.

The above is preferable examples of the present invention, and it should be pointed out that a plurality of improvements and retouches can further be made by those having ordinary skills in the art without departing from the principle of the present invention. Such improvements and retouches shall all be considered to fall into the protection scope of the present invention.

### Industrial Applicability

All of the method and system for transmitting service data, the terminal and the user data processing entity use the virtual IP address, and since each unique virtual IP address denotes the different service types of different users of different physical IP address terminals, or denotes different service types of the same user of the same physical IP address terminal, or denotes the same service type of different users of the same physical IP address terminal. When the same user of the same terminal requests different services, the virtual IP addresses are different; when different users of the same terminal request the same service, the virtual IP addresses are different, and all of them correspond to one unique virtual IP address respectively. Therefore, virtualization of multiple terminals and multiple services is able to be implemented on the same terminal.

## Claims

1. A method for transmitting service data, which is applied in a scenario of a terminal sending uplink data to a user data processing entity, and said method comprising:
the terminal obtaining a virtual Internet Protocol (IP) address corresponding to a service type requested by an application layer user of said terminal, said virtual IP address being an IP address generated according to a physical identifier of said terminal, an identifier of said application layer user and an identifier of said service type;
said terminal receiving first uplink data of said service type, a source IP address in said first uplink data being a physical IP address of said terminal, and a destination IP address being said virtual IP address;
said terminal replacing the source IP address in said first uplink data with said virtual IP address, replacing the destination IP address in said first uplink data with a physical IP address of a service server corresponding to said service type, and generating second uplink data; and
said terminal sending said second uplink data to the user data processing entity through a base station, and said user data processing entity forwarding said second uplink data to said service server.

2. The method for transmitting service data as claimed in claim 1, wherein
the step of said terminal obtaining the virtual IP address corresponding to the service type requested by the application layer user of said terminal comprises:
said terminal processing the physical identifier of said terminal, the identifier of said application layer user and the identifier of said service type according to a virtual IP address allocation rule, and generating said virtual IP address; or
the step of said terminal obtaining the virtual IP address corresponding to the service type requested by the application layer user of said terminal comprises:
said terminal sending a message including the physical identifier of said terminal, the identifier of said application layer user and the identifier of said service type to an IP address allocation entity; and
said terminal receiving the virtual IP address from said IP address allocation entity, and said virtual IP address being an IP address generated by said IP address allocation entity processing the physical identifier of said terminal, the identifier of said application layer user and the identifier of said service type.

3. The method for transmitting service data as claimed in claim 1, wherein after the step of said terminal replacing the source IP address in said first uplink data with said virtual IP address, replacing the destination IP address in said first uplink data with the physical IP address of the service server corresponding to said service type, and generating the second uplink data, further comprises:
said terminal carrying out cyclic redundancy check on said second uplink data.

4. The method for transmitting service data as claimed in claim 1, wherein before the step of said terminal sending said second uplink data to the user data processing entity through the base station, further comprises:
said terminal carrying out bearer mapping according to said service type identifier;
the step of said terminal sending said second uplink data to the user data processing entity through the base station comprises:
said terminal sending said second uplink data to the user data processing entity through said base station according to said bearer mapping.

5. The method for transmitting service data as claimed in claim 2, wherein said virtual IP address further comprises: information of the base station where said terminal is located;
the step of said terminal processing the physical identifier of said terminal, the identifier of said application layer user and the identifier of said service type according to the virtual IP address allocation rule, and generating said virtual IP address comprises:
said terminal processing the physical identifier of said terminal, the identifier of said application layer user, the identifier of said service type, and an identifier of the base station where said terminal is located according to the virtual IP address allocation rule, and generating said virtual IP address;
the step of said terminal receiving the virtual IP address from said IP address allocation entity, and said virtual IP address being the IP address generated by said IP address allocation entity processing the physical identifier of said terminal, the identifier of said application layer user and the identifier of said service type comprises:
said terminal receiving the virtual IP address from said IP address allocation entity, and said virtual IP address being the IP address generated by said IP address allocation entity processing the physical identifier of said terminal, the identifier of said application layer user, the identifier of said service type and the identifier of the base station where said terminal is located.

6. A method for transmitting service data, which is applied in a scenario of a terminal receiving downlink data from a user data processing entity, and said method comprising:
said terminal receiving first downlink data from said user data processing entity through a base station, a destination Internet Protocol (IP) address in said first downlink data being a virtual IP address, and said virtual IP address being an IP address generated according to a physical identifier of said terminal, an identifier of an application layer user of said terminal and an identifier of service type requested by said application layer user;
said terminal replacing a source IP address in said first downlink data with said virtual IP address, replacing a destination IP address in said first downlink data with a physical IP address of said terminal, and generating second downlink data;
said terminal obtaining the identifier of the application layer user corresponding to said virtual IP address; and
said terminal sending said second downlink data to said application layer user.

7. A terminal, comprising:
a first obtaining unit, which is configured to obtain a virtual Internet Protocol (IP) address corresponding to a service type requested by an application layer user of said terminal, wherein said virtual IP address is an IP address generated according to a physical identifier of said terminal, an identifier of said application layer user and an identifier of said service type;
a first receiving unit, which is configured to receive first uplink data of said service type, wherein a source IP address in said first uplink data is a physical IP address of said terminal, and a destination IP address is said virtual IP address;
a first replacing unit, which is configured to replace the source IP address in said first uplink data with said virtual IP address, replace the destination IP address in said first uplink data with a physical IP address of a service server corresponding to said service type, and generate second uplink data; and
a first sending unit, which is configured to send said second uplink data to a user data processing entity through a base station.
